(19) Europäisches Patentamt
European Patent Office
Office européen des brevets

(11) Veröffentlichungsnummer: **0 128 351**
**A1**

# (12) EUROPÄISCHE PATENTANMELDUNG

(21) Anmeldenummer: **84105134.5**

(22) Anmeldetag: **07.05.84**

(51) Int. Cl.³: **A 01 N 53/00**
//
(A01N53/00, 37/10, 37/04, 37/02)

(30) Priorität: **17.05.83 DE 3317823**

(43) Veröffentlichungstag der Anmeldung: **19.12.84**
**Patentblatt 84/51**

(84) Benannte Vertragsstaaten: **AT BE CH DE FR GB IT LI NL SE**

(71) Anmelder: **BAYER AG, Konzernverwaltung RP**
**Patentabteilung, D-5090 Leverkusen 1 Bayerwerk (DE)**

(72) Erfinder: **Behrenz, Wolfgang, Dr., Untergruendemich 14,**
**D-5063 Overath (DE)**
Erfinder: **Schütte, Manfred, Dr., Am Theuspfad 76,**
**D-5024 Pulheim 4 (DE)**

## (54) Schädlingsbekämpfungsmittel.

(57) Die vorliegende Erfindung betrifft die neue Verwendung von schwerflüchtigen Estern von Mono- und/oder Dicarbonsäuren als Synergisten in Schädlingsbekämpfungsmitteln, welche Pyrethroide enthalten, sowie diese Schädlingsbekämpfungsmittel und deren Verwendung zur Bekämpfung von Schädlingen, vorzugsweise von Arthropoden.

EP 0 128 351 A1

0128351

BAYER AKTIENGESELLSCHAFT
Konzernverwaltung RP
Patentabteilung

5090 Leverkusen, Bayerwerk

S/ABc
III

## Schädlingsbekämpfungsmittel

Die vorliegende Erfindung betrifft die neue Verwendung von schwerflüchtigen Estern von Mono- und/oder Dicarbonsäuren als Synergisten in Schädlingsbekämpfungsmitteln, welche Pyrethroide enthalten, sowie diese Schädlingsbekämpfungsmittel und deren Verwendung zur Bekämpfung von Schädlingen, vorzugsweise von Arthropoden.

Aus naheliegenden Gründen (ökonomische und ökologische Gründe, Verminderung der Resistenzbildung usw.) strebt man in der Schädlingsbekämpfung den Einsatz möglichst geringer Wirkstoffkonzentrationen an. Die Aufwandmengen an Wirkstoff können jedoch nicht in beliebiger Weise herabgesetzt werden, da ab einer bestimmten Aufwandmengenuntergrenze das gewünschte Bekämpfungsergebnis nicht mehr erreicht wird und/oder durch eine nicht ausreichende Vernichtung der Schädlingspopulationen einer (weiteren) Resistenzbildung Vorschub geleistet werden kann. Der vorliegenden Erfindung lag die Aufgabe zugrunde, synergistisch wirkende Stoffe aufzufinden, welche (bei fehlender oder geringer arthropodizider Wirksamkeit) in Mischung mit Pyrethroiden deren arthropodizide Wirksamkeit erhöhen.

Synergistische Mischungen von Pyrethroiden z.B. mit bestimmten Methylendioxyphenyl-Derivaten, z.B. Piperonylbutoxid als Synergisten sind bereits bekannt geworden (vgl. z.B. K. Naumann, Chemie der Pflanzenschutz- und Schädlingsbekämpfungsmittel, Springer-Verlag Berlin, Band 7 (1981) Seiten 3-6). Unter den Bedingungen der praktischen Anwendung ist die Wirksamkeit solcher Präparate jedoch nicht immer voll befriedigend.

Es wurde nun überraschend gefunden, daß schwerflüchtige Ester von Mono- und/oder Dicarbonsäuren als Synergisten verwendet werden können, welche die arthropodizide Wirksamkeit von Pyrethroiden verstärken. Die als Synergisten verwendbaren Ester weisen selbst keine oder keine signifikante arthropodizide Wirksamkeit auf.

Die vorliegende Erfindung betrifft weiterhin neue Schädlingsbekämpfungsmittel, welche schwerflüchtige Ester von Mono- und/oder Dicarbonsäuren und Pyrethroide enthalten, Verfahren zur Herstellung dieser Schädlingsbekämpfungsmittel durch Mischen der synergistisch wirkenden Ester mit Pyrethroiden und gegebenenfalls bei der Formulierung von Schädlingsbekämpfungsmitteln eingesetzten Verdünnungsmitteln und/oder Zusatzstoffen sowie die Verwendung dieser Schädlingsbekämpfungsmittel zur Bekämpfung von tierischen Schädlingen, vorzugsweise von Arthropoden, insbesondere von Insekten und Spinnentieren.

Als Synergisten werden vorzugsweise solche schwerflüchtigen Ester von Mono- und/oder Dicarbonsäureester verwendet, welche einen Siedepunkt von über 250°C aufweisen.

Vorzugsweise werden als schwerflüchtige Ester von Mono- und/oder Dicarbonsäuren solche Verbindungen der allgemeinen Formel I, welche einen Siedepunkt von über 250°C aufweisen, erfindungsgemäß verwendet:

$$R-O-\overset{O}{\overset{\|}{C}}-X-R^1 \qquad (I)$$

in welcher

R und $R^1$ gleich oder verschieden sind und für gegebenenfalls substituierte aliphatische Reste, welche durch ein oder mehrere Heteroatome unterbrochen sein können oder für gegebenenfalls substituierte cycloaliphatische Reste stehen und

X für eine direkte Bindung (zwischen $-\overset{O}{\overset{\|}{C}}-$ und $R^1$) oder für die Gruppe $-Y-\overset{O}{\overset{\|}{C}}-O-$ steht, worin -Y- einen gegebenenfalls substituierten zweiwertigen aliphatischen, cycloaliphatischen oder aromatischen Rest bedeutet.

Als gegebenenfalls substituierte aliphatische Reste R und $R^1$ stehen vorzugsweise gegebenenfalls substituierte geradkettige oder verzweigte Alkylreste mit vorzugsweise 1 bis 25, insbesondere 1 bis 20 und besonders bevorzugt mit 1 bis 16 Kohlenstoffatomen. Diese Reste können durch ein oder mehrere gleiche oder verschiedene (vorzugsweise gleiche) Heteroatome wie Sauerstoff oder Schwefel (vorzugsweise Sauerstoff) unterbrochen sein, wobei beispielsweise Polyetherketten vorliegen.

Beispielhaft seien gegebenenfalls substituiertes Methyl, Ethyl, n.- und i.-Propyl, n.-, i- und t.-Butyl, Pentanyl, Nonanyl, i-Nonanyl, Tridecanyl ($CH_3-(CH_2)_{12}-$) und i-Tridecanyl genannt. Als durch Heteroatome unterbrochene Reste sei beispielhaft die Polyethergruppe $-(O\ CH_2-CH_2)_n-$, wobei n für eine ganze Zahl von 1 bis 12, vorzugsweise 2 bis 10 steht genannt. Das endständige O-Atom trägt vorzugsweise ein Wasserstoffatom (so daß endständig Hydroxylgruppen vorliegen). Als besonders bevorzugte Reste R und $R^1$ seien Methyl, i.-Propyl, n-Butyl, i-Nonanyl, n-Trisdodecanyl und der Polyethanrest $H-(O-CH_2-CH_2)_n-$ (mit n = 2-10) aufgeführt.

Vorzugsweise sind die aliphatischen Reste R und $R^1$ unsubstituiert.

Gegebenenfalls substituierte cycloaliphatische Reste R und $R^1$ steht vorzugsweise gegebenenfalls substituiertes mono-, bi- und tricyclisches Cycloalkyl mit vorzugsweise

3 bis 10, insbesondere 3, 5 oder 6 Kohlenstoffatomen. Beispielhaft seien gegebenenfalls substituiertes Cyclopropyl, Cyclobutyl, Cyclopentyl, Cyclohexyl, Cycloheptyl, Bicyclo [2.2.1] heptyl, Bicyclo [2.2.2] octyl und Adamantyl genannt.

Der gegebenenfalls substituierte zweiwertige aliphatische Rest -Y- ist geradkettig oder verzweigt und enthält vorzugsweise 1 bis 10, insbesondere 2 bis 8 Kohlenstoffatome, wobei beispielsweise $-CH_2-CH_2-$ und $-(CH_2)_4-$ aufgeführt seien. Vorzugsweise ist der Rest geradkettig und unsubstituiert.

Als gegebenenfalls substituierter zweiwertiger cycloaliphatischer Reste -Y- stehen vorzugsweise die (jedoch zweiwertigen) Reste, wie sie bei der Erläuterung cycloaliphatischen Reste R und $R^1$ angegeben werden.

Als gegebenenfalls substituierter zweiwertiger aromatischer Rest -Y- steht vorzugsweise Phenylen (o-, m- oder p-, vorzugsweise o-Phenylen). Bevorzugt ist hierbei Phenylen unsubstituiert.

Die gegebenenfalls substituierten Reste R, $R^1$ und -Y- können einen oder mehrere, vorzugsweise 1 bis 3, insbesondere 1 oder 2 gleiche oder verschiedene Substituenten tragen. Als Substituenten seien beispielhaft aufgeführt: Alkoxy mit vorzugsweise 1 bis 4, insbesondere 1 oder 2 Kohlenstoffatomen, wie Methoxy, Ethoxy, n.- und i.-Propyloxy und n.-, i.- und t.-Butyloxy; Alkylthio mit vorzugsweise 1 bis 4, insbesondere 1 oder 2 Kohlenstoffatomen, wie Methylthio, Ethylthio, n.- und i.-Propylthio und n.-, i.- und t.-Butylthio; Halogenalkyl mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome, vorzugsweise Fluor, Chlor oder Brom, insbesondere Fluor stehen, wie Trifluormethyl; Hydroxy und/oder Halogen, vorzugsweise Fluor, Chlor, Brom und Jod, insbesondere Chlor und Brom.

Als besonders bevorzugte erfindungsgemäß verwendbare schwerflüchtige Ester der Formel (I) seien genannt:

1. Phthalsäurediisononylester

2. Adipinsäurepolyester (Ultramoll III)

3. Adipinsäuredimethylester

4. Isopropylmyristat

5. Adipinsäuredi-n-butylester

Die Strukturformeln dieser Verbindungen werden bei den biologischen Beispielen ("II Erfindungsgemäß verwendbare Synergisten") aufgeführt, wobei die obige Bezifferung der Bezifferung in den biologischen Beispielen entspricht.

Die Verbindungen der allgemeinen Formel (I) können einzeln oder in Mischungen untereinander gesetzt werden.

Die Verbindungen der allgemeinen Formel (I) sind bekannt und/oder können nach oben den allgemein üblichen Verfahren und Methoden leicht hergestellt werden. Sie weisen selbst keine oder keine signifikanten arthropodiziden Wirkungen auf.

Als Pyrethoride, bei welchen die Verbindungen der allgemeinen Formel (I) als Synergisten verwendet werden können, kommen praktisch alle bekannten arthropodizide Pyrethroide in Frage, wie sie z.B. beschrieben werden in Pflanzenschutz und Schädlingsbekämpfung, herausgegeben von K.H. Büchel, Stuttgart, Thieme-Verlag (1977) oder Chemie der Pflanzenschutz- und Schädlingsbekämpfungsmittel, herausgegeben von K. Wegler, Band 7 (K.Naumann, Chemie der synthetischen Pyrethroid-Insektizide), Springer-Verlag Berlin, 1981.

Bevorzugte Pyrethoide, bei welchen die Ester der Formel (I) ihre synergistische Wirkung entfalten, haben die allgemeine Formel (II)

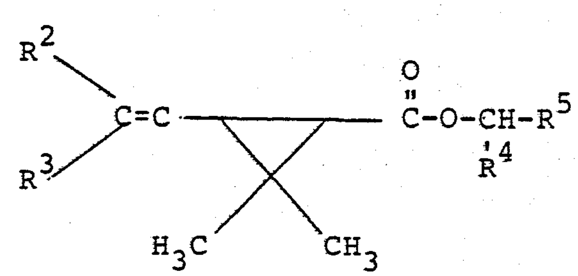

$R^2$ für Wasserstoff, Methyl, Fluor, Chlor oder Brom und

$R^3$ für Methyl, Fluor, Chlor, Brom, $C_1$-$C_2$-Fluoralkyl oder $C_1$-$C_2$-Chlorfluoralkyl oder für gegebenenfalls durch Halogen und/oder gegebenenfalls Halogen-substituierte Reste der Reihe $C_1$-$C_4$-Alkyl, $C_1$-$C_4$-Alkoxy, $C_1$-$C_4$-Alkylthio und/oder $C_1$-$C_2$-Alkylendioxy substituiertes Phenyl steht, oder worin beide Reste $R^2$ und $R^3$ für $C_2$-$C_5$-Alkandiyl (Alkylen) stehen;

$R^4$ für Wasserstoff, $C_1$-$C_4$-Alkyl, $C_1$-$C_4$-Halogenalkyl, Cyano oder Ethinyl steht und

$R^5$ für gegebenenfalls durch Halogen substituierte Reste der Reihe Phenyl, Furyl oder Tetrahydrophthalimido steht, wobei diese Reste weiterhin substituiert sein können durch einen gegebenenfalls Halogen-substituierten Rest der Reihe $C_1$-$C_4$-Alkyl, $C_2$-$C_4$-Alkenyl, $C_1$-$C_4$-Alkoxy, $C_2$-$C_4$-Alkenoxy, $C_1$-$C_4$-Alkylthio, $C_1$-$C_2$-Alkylendioxy, Phenoxy und/oder Benzyl, wobei $R^5$ vorzugsweise für Pentafluorphenyl, 3,4-Dichlorphenyl, Phenoxyphenyl, welches in einem oder beiden Phenylringen durch Halogen substituiert sein kann oder für Tetrahydrophthalimido steht.

Besonders bevorzugt sind Pyrethroide der allgemeinen Formel (II), in welcher

$R^2$ und $R^3$ für Chlor, Brom oder Methyl stehen,

$R^4$ für Wasserstoff oder CN steht und

$R^5$ für Phenyl steht, welches durch Halogen (vorzugsweise Fluor) und/oder durch gegebenenfalls durch Halogen (vorzugsweise Fluor) substituiertes Phenoxy substituiert sein kann, wobei $R^5$ vorzugsweise für Pentafluorphenyl, für 3-Phenoxyphenyl oder für 3-Phenoxy-4-Fluorphenyl steht.

Als besonders gut geeignete Pyrethroide seien beispielhaft genannt:

A) (-)1R-trans-2,2-Dimethyl-3-(2,2-dichlorvinyl)-cyclopropancarbonsäurepentafluorbenzylester

(common name: Fenfluthrin)

B) 2,2-Dimethyl-4-dichlorvinyl-cis/trans-cyclopropancarbonsäure-$\alpha$-cyano-3'-phenoxy-4'-fluorp-benzylester

(common name: Cyfluthrin)

C) /R,S/-$\alpha$-cyano-3-phenoxybenzyl (1R, 1S)-cis/trans-3-(2,2-dichlorovinyl)-2,2-dimethylcyclopropanecarboxylate

(common name: Cypermethrin)

D) 3-Phenoxybenzyl ($\pm$)-cis, trans-2,2-dimethyl-3-(2,2-dichlorvinyl)-cyclopropancarboxylat

(common name: Permethrin)

E) (S)-α-cyano-m-phenoxybenzyl (1R, 3R)-3-(2,2-dibromovinyl)-2,2-dimethyl-cyclopropanecarboxylate (common name: Deltamethrin)

Die Strukturformeln dieser Verbindungen werden bei den biologischen Beispielen ("I Erfindungsgemäß verwendbare Pyrethroide ("Wirkstoffe")) aufgeführt, wobei die obige alphabetische Beziehung der in den biologischen Beispielen entspricht. Selbstverständlich können alle arthropodizide isomeren Formen den Verbindungen und ihre Mischungen verwendet werden.

Die erfindungsgemäß einsetzbaren Pyrethoride sind bekannt und/oder können nach allgemein üblichen Verfahren und Methoden erhalten werden (vgl. die oben erwähnte Literatur "Pflanzenschutz und Schädlingsbekämpfungsmittel" und "Chemie der Pflanzenschutz- und Schädlingsbekämpfungsmittel". Die Pyrethroide können als Einzelstoffe oder in Mischungen untereinander eingesetzt werden.

Im folgenden werden die Verbindungen der allgemeinen Formel (I) als Synergisten und die Pyrethroide der allgemeinen Formel II als Wirkstoffe bezeichnet. Die Mischungen aus Synergisten und Pyrethroiden werden Wirkstoffkombinationen genannt.

Die Gewichtsverhältnisse der Synergisten und Wirkstoffe können erfindungsgemäß in einem relativ großen Bereich variiert werden. Im allgemeinen werden die Synergisten mit den Wirkstoffen in Mischungsverhältnissen zwischen

1 : 100 und 100 : 1, vorzugsweise zwischen 1 : 30 und 30 : 1 (Gewichtsteile) eingesetzt. Die Mischungen können zusätzlich auch weitere arthropodizide Wirkstoffe (wie Phosphorester, Carbamate oder halogenierte Kohlenwasserstoffe enthalten, ohne daß die synergistische Wirkung nachteilig beeinflußt wird.

Die Wirkstoffkombinationen (aus Synergisten und Pyrethroiden) besitzen nicht nur eine schnelle knock down-Wirkung, sondern bewirken auch die nachhaltige Abtötung der tierischen Schädlinge, insbesondere Insekten, die in der Land- und Viehwirtschaft, in Forsten, im Vorrats- und Materialschutz sowie im Hygienebereich vorkommen. Sie sind gegen alle oder einzelne Entwicklungsstadien und besonders auch gegen resistente Populationen wirksam.

Zu den tierischen Schädlingen, welche unter Verwendung der erfindungsgemäßen Wirkstoffkombinationen bekämpft werden können, gehören beispielsweise:

Aus der Ordnung der Isopoda z.B. Oniscus asellus, Porcellio scaber.
Aus der Ordnung der Thysanura z.B. Lepisma saccharina.
Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Schistocerca gregaria.
Aus der Ordnung der Dermaptera z.B. Forficula auricularia.
Aus der Ordnung der Isoptera z.B. Reticulitermes spp.

Aus der Ordnung der Anoplura z.B. Pediculus humanus corporis, Haematopinus spp., Linograthus spp.
Aus der Ordnung der Mallophaga z.B. Trichodectes spp., Damalinea spp.
Aus der Ordnung der Heteroptera z.B. Cimex lectularius, Rhodnius prolixus, Triatoma spp.
Aus der Ordnung der Homoptera z.B. Myzus spp., und Psylla spp.
Aus der Ordnung der Lepidoptera z.B. Ephestia kuehniella und Galleria mellonella.
Aus der Ordnung der Coleoptera z.B. Anobium punctatum, Rhizopertha dominica, Bruchidius obtectus, Acanthoscelides obtectus, Hylotrupes bajulus, Oryzaephilus surinamensis, Sitophilus spp., Dermestes spp., Trogoderma spp., Anthrenus spp., Attagenus spp., Lyctus spp., Ptinus spp., Niptus hololeucus, Gibbium psylloides, Tribolium spp. und Tenebrio molitor.
Aus der Ordnung der Hymenoptera z.B. Lasius spp., Monomorium pharaonis, Vespa spp.
Aus der Ordnung der Diptera z.B. Aëdes spp., Anopheles spp., Culex spp., Drosophila melanogaster, Musca spp., Fannia spp., Calliphora erythrocephala, Lucilia spp., Chrysomyia spp., Gastrophilus spp., Hyppobosca spp., Stomoxys spp., Oestrus spp., Hypoderma spp. und Tabanus spp.
Aus der Ordnung der Siphonaptera z.B. Xenopsylla cheopis, Ceratophyllus spp.

Die Wirkstoffkombinationen können in den üblichen Formulierungen übergeführt werden, wie Lösungen, Emulsionen, Spritzpulver, Suspensionen, Pulver, Stäubemittel, Schäume, Pasten, lösliche Pulver, Aerosole,

Ölsprühmittel, Suspensions-Emulsionskonzentrate, Wirkstoffimprägnierte Natur- und synthetische Stoffe, Verdampferplättchen (engl.: "vape mats"), Fliegenstifte (stiftförmige Zubereitungen, mit welcher beim Bestreichen von Materialoberflächen die Wirkstoffkombination auf diese Oberflächen aufgetragen werden können), Feinstverkapselungen in polymeren Stoffen, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffgemische mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssiges Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole,

wie Butanol oder Glykol, sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe: natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate: gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel: nichtionogene und anionische Emulgatoren, wie Polyoxyethylen-Fettsäure-Ester, Polyoxyethylen-Fettalkohol-Ether, z.B. Alkylaryl-polyglykol-ether, Alkylsulfonate; als Dispergiermittel: z.B. Lignin, Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe, und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoffkombination, vorzugsweise zwischen 0,5 und 90 %.

Die Anwendung der erfindungsgemäßen Wirkstoffkombinationen erfolgt in Form ihrer handelsüblichen Formulierungen und/oder den aus diesen Formulierungen bereiteten Anwendungsformen.

Der gesamte Wirkstoffgehalt (einschließlich Synergist) der aus den handelsüblichen Formulierungen bereiteten Anwendungsformen kann in weiten Bereichen variieren. Die Wirkstoffkonzentration der Anwendungsformen kann 0,0001 bis zu 100 Gew.-% Wirkstoffkombination, vorzugsweise zwischen 0,01 und 20 Gew.-% liegen.

Die Anwendung geschieht in einer den Anwendungsformen angepaßten üblichen Weise.

Anhand der folgenden Beispiele soll die Wirksamkeit der erfindungsgemäß verwendbaren Wirkstoffkombinationen erläutert werden:

I. Erfindungsgemäß verwendbare Pyrethroide ("Wirkstoffe")

| Kurzbezeichnung (Buchstabe) | Formel | (common name:) |
|---|---|---|
| A) | 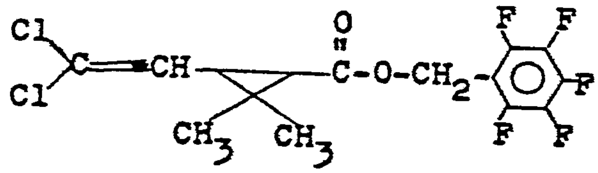 | (Fenfluthrin) |
| B) | 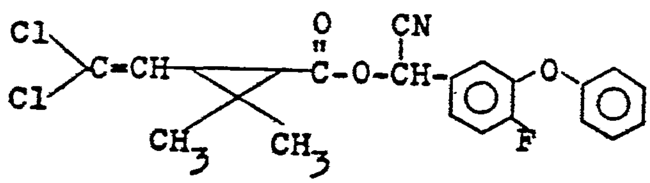 | (Cyfluthrin) |
| C) | 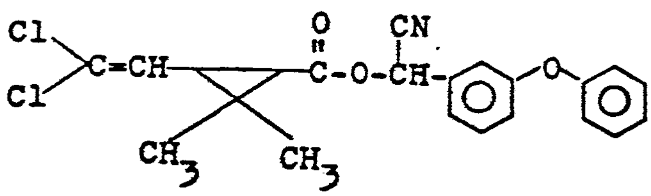 | (Cypermethrin) |
| D) | 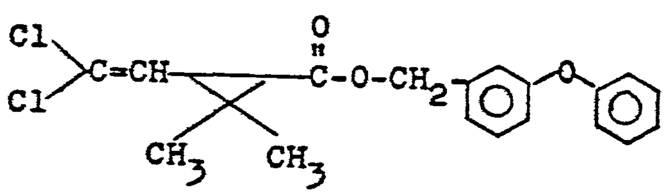 | (Permethrin) |
| E) | 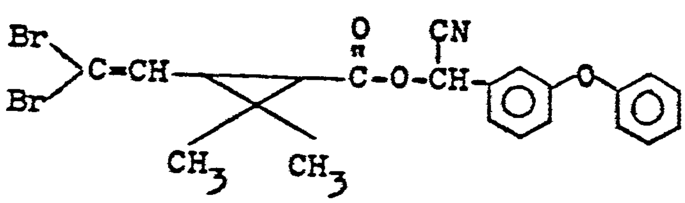 | (Deltamethrin) |

II. Erfindungsgemäß verwendbare Synergisten

| Kurzbezeichnung (Nr.) | Formel |
|---|---|
| 1.) | 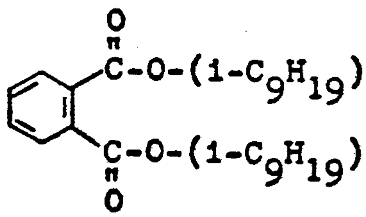 |
| 2.) | $H-(O-CH_2-CH_2)_n-O-\overset{O}{\overset{\|}{C}}-(CH_2)_4-\overset{O}{\overset{\|}{C}}-O-(CH_2-CH_2-O)_n-H$<br>$n = 2 - 10$ (Gemisch) |
| 3.) | $CH_3-O-\overset{O}{\overset{\|}{C}}-(CH_2)_4-\overset{O}{\overset{\|}{C}}-O-CH_3$ |
| 4.) | 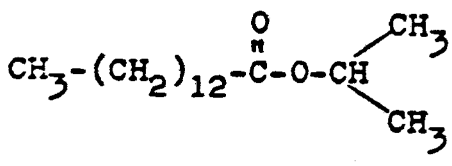 |
| 5.) | $n-C_4H_9-O-\overset{O}{\overset{\|}{C}}-(CH_2)_4-\overset{O}{\overset{\|}{C}}-O-nC_4H_9$ |

III. Testdurchführung

$KT_{100}$-Test

Testtiere: Gegen Phosphorsäureester und besonders Pyrethroide stark resistente weibliche Musca domestica (Stamm-Hans)

Lösungsmittel: Aceton

Von den Wirkstoffen, Synergisten und Gemischen aus Wirkstoffen und Synergisten werden Lösungen hergestellt und 2,5 ml davon in Petrischalen auf Filterpapier von 9,5 cm Durchmesser pipetiert. Das Filterpapier saugt die Lösungen auf. Die Petrischalen bleiben so lange offen stehen, bis das Lösungsmittel vollständig verdunstet ist. Anschließend gibt man 25 Testtiere in die Petrischalen und bedeckt sie mit einem Glasdeckel.

Der Zustand der Tiere wird bis zu 6 Stunden fortlaufend kontrolliert. Es wird diejenige Zeit ermittelt, die für eine 100 %ige knock-down-Wirkung ("$KT_{100}$") erforderlich ist. Wird die $KT_{100}$ nach 6 Stunden nicht erreicht, wird der %-Satz der knock down gegangenen Testtiere festgestellt.

Konzentrationen der Wirkstoffe, Synergisten und Gemische und ihre Wirkungen gehen aus der nachfolgenden Tabelle hervor.

IV. Testergebnisse

$KT_{100}$-Test mit gegen Phosphorsäureester und besonders Pyrethroide stark resistenten weibliche Musca domestica (Stamm Hans)

| Wirkstoff | + Synergist | Anwendungskonzentration (Gew.-%) Wirkstoff | Anwendungskonzentration (Gew.-%) Synergist | Verhältnis Wirkstoff/ Synergist (Gew.-Teile) | $KT_{100}$ nach Minuten bzw. % nach 360' |
|---|---|---|---|---|---|
| A) | - | 0,004 | - | | 360'= 50 % |
| B) | - | 0,1 | - | | 360'= 50 % |
| C) | - | 0⌡2 | - | | 360'= 40 % |
| D) | - | 0,1 | - | | 360'= 85 % |
| E) | - | 1,0 | - | | 360'= 50 % |
| | 1) | - | 10,0 | | 360'= 0 % |
| | 2) | - | 10,0 | | 360'= 0 % |
| | 3) | - | 10,0 | | 360'= 70 % |
| | 4) | - | 10,0 | | 360'= 0 % |
| | 5) | - | 10,0 | | 360'= 0 % |

0128351

IV. Testergebnisse (Fortsetzung)

| Wirkstoff | + | Synergist | Anwendungskonzentration (Gew.-%) Wirkstoff+Synergist | Verhältnis Wirkstoff/ Synergist (Gew.-Teile) | $KT_{100}$ nach Minuten bzw. % nach 360' |
|---|---|---|---|---|---|
| A | + | 1 | 0,006 + 0,0006 | 10 : 1 | 75' |
| | | | 0,004 + 0,04 | 1 : 10 | 90' |
| | | | 0,004 + 0,016 | 1 : 4 | 150' |
| A | + | 5 | 0,004 + 0,016 | 1 : 4 | 75' |
| A | + | 4 | 0,004 + 0,02 | 1 : 5 | 105' |
| B | + | 1 | 0,04 + 2,0 | 1 : 50 | 45' |
| | | | 0,04 + 0,004 | 10 : 1 | 90' |
| B | + | 2 | 0,1 + 1,0 | 1 : 10 | 60' |
| | | | 0,04 + 0,004 | 10 : 1 | 75' |
| | | | 0,1 + 0,004 | 25 : 1 | 45' |
| B | + | 3 | 0,1 + 10,0 | 1 : 100 | 45' |
| | | | 0,1 + 0,004 | 25 : 1 | 75' |
| B | + | 4 | 0,1 + 10,0 | 1 : 100 | 60' |
| | | | 0,1 + 0,004 | 25 : 1 | 75' |
| B | + | 5 | 0,1 + 10,0 | 1 : 100 | 45' |
| | | | 0,1 + 0,004 | 25 : 1 | 60' |
| C | + | 1 | 0,2 + 2,0 | 1 : 10 | 60 |
| | | | 0,2 + 0,02 | 10 : 1 | 150' |
| C | + | 3 | 0,2 + 10,0 | 1 : 50 | 30' |
| | | | 0,2 + 0,2 | 1 : 1 | 45' |

IV. Testergebnisse (Fortsetzung)

| Wirkstoff + Synergist | Anwendungskonzentration (Gew.-%) Wirkstoff+Synergist | Verhältnis Wirkstoff/ Synergist (Gew.-Teile) | $KT_{100}$ nach Minuten bzw. % nach 360' |
|---|---|---|---|
| C + 4 | 0,2 + 1,0 | 1 : 5 | 60' |
| | 0,2 + 0,004 | 50 : 1 | 60' |
| C + 5 | 0,2 + 10,0 | 1 : 50 | 45' |
| | 0,2 + 0,004 | 50 : 1 | 105' |
| D + 1 | 0,1 + 0,01 | 10 : 1 | 120' |
| D + 2 | 0,1 + 0,004 | 25 : 1 | 105' |
| D + 3 | 0,1 + 10,0 | 1 : 100 | 120' |
| | 0,1 + 0,1 | 1 : 1 | 90' |
| D + 4 | 0,1 + 0,01 | 10 : 1 | 120' |
| D + 5 | 0,1 + 0,1 | 1 : 1 | 90' |
| E + 1 | 0,2 + 4,0 | 1 : 20 | 30' |
| | 1,0 + 1,0 | 1 : 1 | 30' |
| | 1,0 + 0,2 | 5 : 1 | 45' |
| E + 2 | 0,2 + 4,0 | 1 : 20 | 30' |
| | 1,0 + 1,0 | 1 : 1 | 30' |
| | 1,0 + 0,2 | 5 : 1 | 75' |
| E + 3 | 0,2 + 4,0 | 1 : 20 | 30' |
| | 1,0 + 1,0 | 1 : 1 | 30' |
| | 0,2 + 10,0 | 1 : 50 | 30' |

IV. Testergebnisse (Fortsetzung)

| Wirkstoff | + | Synergist | Anwendungskonzentration (Gew.-%) Wirkstoff+Synergist | Verhältnis Wirkstoff/ Synergist (Gew.-Teile) | $KT_{100}$ nach Minuten bzw. % nach 360' |
|---|---|---|---|---|---|
| E | + | 4 | 0,2 + 4,0 | 1 : 20 | 30' |
| | | | 1,0 + 1,0 | 1 : 1 | 30' |
| | | | 1,0 + 0,2 | 5 : 1 | 45' |
| | | | 1,0 + 10,0 | 1 : 10 | 30' |
| | | | 1,0 + 0,02 | 50 : 1 | 105' |
| | | | 0,2 + 10,0 | 1 : 50 | 45' |
| E | + | 5 | 0,2 + 10,0 | 1 : 50 | 30' |
| | | | 1,0 + 0,1 | 10 : 1 | 45' |
| | | | 1,0 + 1,0 | 1 : 1 | 30' |

Herstellung von erfindungsgemäßen Schädlingsbekämpfungsmitteln soll anhand der folgenden Beispiele erläutert werden (alle %-Angaben beziehen sich auf Gewichtsprozente).

Beispiel 1

Zur Herstellung eines Fliegenstiftes werden 50 mg Fenfluthrin (A) in einer Mischung aus 500 mg Adipinsäuredimethylester (3), 1200 mg Isododecan und 800 mg Xylol gelöst. Mit dieser Lösung wird ein geeignetes sorbtives Material wie z.B. Cellulose, Filz, Pappe, Kunststofffasern oder dergleichen getränkt.

Beispiel 2

Zur Herstellung eines Fliegenstiftes werden 100 mg Cyfluthrin (B) in einer Mischung aus 100 mg Adipinsäuredimethylester (3), 1200 mg Isododecan und 800 mg Xylol gelöst und die so erhaltene Lösung auf ein sorbitives Material gegeben.

Beispiel 3

Zur Herstellung eines Ölsprühmittels werden 0,03 % Fenfluthrin (A) und 0,5 % Dichlorvos in einer Mischung von 2,5 % Isopropylmyristat (4) und 96,97 % Isododecan gelöst.

Beispiel 4

Zur Herstellung eines Fliegenstiftes werden 50 mg Deltamethrin (E) in einer Mischung von 500 mg Adipinsäure-din-butylester (5), 1200 mg Isododecan und 800 mg Xylol gelöst und die erhaltene Lösung auf ein sorbitives Material aufgetragen.

Beispiel 5

Zur Herstellung eines Aerosols werden 0,04 % Fenfluthrin (A) und 0,025 % Cyfluthrin (B) in einer Mischung aus 2,5 % Adipinsäuredimethylester (3), 25 % Methylenchlorid und 12,425 % Isododecan gelöst, 0,01 % eines Parfüms hinzugegeben, das ganze in eine Sprühdose gefüllt und mit 60 % eines Treibgasgemisches aus Propan und Butan versehen.

Beispiel 6

Auf Celluloseplättchen von 850 mg Gewicht wird eine Lösung von 5 mg Fenfluthrin (A) in 150 mg Phthalsäurediisononylester (1) zusammen mit 1 mg Farbstoff und Parfüm aufpipettiert.

Beispiel 7

Zur Herstellung eines Fliegenstiftes werden 100 mg Permethrin (D) in eine Mischung aus 3,3 mg Adipinsäurepolyester (2), 1200 mg Isododecan und 800 mg Xylol gelöst und die so erhaltene Lösung auf ein sorbitives Material gegeben.

Beispiel 8

Zur Herstellung eines Streichmittels werden in einem Rührwerk 0,5 % Cyfluthrin (B), 1,0 % Phoxim, 2,5 % Adipinsäurepolyester, 3 % hochdisperse Kieselsäure, 0,75 % Na-Carboxymethylcellulose und 92,25 % Saccharose inniglich gemischt.

Beispiel 9

Zur Herstellung eines Fliegenstiftes werden 100 mg Cypermethrin (C) in einer Mischung aus 10 mg Adipinsäuredi-n-butylester (5), 1200 mg Isododecan und 800 mg Xylol gelöst und die so erhaltene Lösung auf ein sorbitives Material aufgetragen.

Die Zahl der Beispiele läßt sich, je nach Anwendungswunsch, beliebig vermehren.

Ein "Fliegenstift" ist eine Vorrichtung, z. B. in Form eines zylindrischen Stiftes, der aus einem Material besteht oder der ein Material enthält, welches mit einem arthropodiziden Mittel getränkt ist. Um das Mittel auf eine gewünschte Fläche, z. B. ein Fensterbrett, auszubringen, wird der Stift unter leichtem Druck gegen diese Fläche bewegt, so daß das Mittel auf die Fläche aufgetragen wird.

Patentansprüche

1. Verwendung von schwerflüchtigen Estern von Mono- und/oder Dicarbonsäuren als Synergisten für arthropodizide Pyrethroide.

2. Verwendung gemäß Anspruch 1, wobei die schwerflüchtigen Ester der Mono- und/oder Dicarbonsäuren einen Siedepunkt von über 250°C aufweisen.

3. Verwendung gemäß den Ansprüchen 1 und 2, wobei als schwerflüchtige Ester von Mono- und/oder Dicarbonsäuren Phthalsäurediisononylester, Adipinsäurepolyester, Adipinsäuredimethylester, Isopropylmyristat und/oder Adipinsäuredi-n-butylester eingesetzt werden.

4. Schädlingsbekämpfungsmittel, welche wenigstens einen schwerflüchtigen Ester eines Mono- oder Dicarbonsäure und wenigstens ein arthropodizides Pyrethroid enthalten.

5. Schädlingsbekämpfungsmittel gemäß Anspruch 4, wobei der schwerflüchtige Ester der Mono- oder Dicarbonsäure einen Siedepunkt von über 250°C aufweist.

6. Schädlingsbekämpfungsmittel gemäß den Ansprüchen 4 und 5, wobei als schwerflüchtiger Ester einer Mono- oder Dicarbonsäure wenigstens ein Ester aus

der Reihe Phthalsäure-diisononylester, Adipinsäurepolyester, Adipinsäuredimethylester, Isopropylmyristat und Adipinsäuredi-n-butylester und als arthropodizides Pyrethroid wenigstens ein Pyrethroid aus der Reihe (common names) Fenfluthrin, Cyfluthrin, Cypermethrin, Permethrin und Deltamethrin enthalten ist.

7. Schädlingsbekämpfungsmittel gemäß den Ansprüchen 4 bis 6, wobei das Gewichtsverhältnis zwischen schwerflüchtigen Ester von Mono- und/oder Dicarbonsäure und arthropodizidem Pyrethroid zwischen 1:100 und 100:1 (Gewichtsteile) liegt.

8. Verwendung der Schädlingsbekämpfungsmittel gemäß den Ansprüchen 4 bis 7 zur Bekämpfung von Schädlingen, vorzugsweise Arthropoden.

9. Verfahren zur Herstellung von Schädlingsbekämpfungsmitteln, dadurch gekennzeichnet, daß man wenigstens einen schwerflüchtigen Ester eines Mono- oder Dicarbonsäure mit wenigstens einem arthropodiziden Pyrethroid und Verdünnungsmittel und gegebenenfalls Formulierungshilfsmitteln, wie oberflächenaktiven Stoffen, vermischt.

10. Verfahren zur Bekämpfung von Schädlingen, dadurch gekennzeichnet, daß man ein Schädlingsbekämpfungsmittel gemäß den Ansprüchen 4 bis 7 auf die Schädlinge und/oder ihren Lebensraum einwirken läßt.

Europäisches Patentamt

**EUROPÄISCHER RECHERCHENBERICHT**

0128351

Nummer der Anmeldung

EP 84 10 5134

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-A-2 738 878 (G. BERNABE)<br>* Patentansprüche; Beispiel 1 * | 1,2,4, 5,7-10 | A 01 N 53/00 //<br>(A 01 N 53/00<br>A 01 N 37/10<br>A 01 N 37/04<br>A 01 N 37/02 ) |
| X | GB-A-2 002 635 (FUMAKILLA)<br>* Seite 1, Zeile 50 - Seite 2, Zeile 49; Seite 3, Zeilen 4-11 * | 1-10 | |
| X | CHEMICAL ABSTRACTS, Band 81, 1974, Seite 95, Nr. 10477x, Columbus, Ohio, US; & JP - A - 73 99 337 (SUMITOMO CHEMICAL CO., LTD.) 15.12.1973<br>* Insgesamt * | 1-5,7-10 | |
| X | CENTRAL PATENTS INDEX, BASIC ABSTRACTS JOURNAL, SEKTION C, AGDOC, Woche Y/07, Februar 1977, London, GB; & JP - A - 77 001 029 (FUMAKILLER LTD.) 06.01.1977<br>* Nr. 12115 * | 1-5,7-10 | RECHERCHIERTE SACHGEBIETE (Int. Cl. 3)<br>A 01 N |
| X | CENTRAL PATENTS INDEX, BASIC ABSTRACTS JOURNAL, SEKTION C, AGDOC, Woche B/22, Mai 1979, London, GB; & JP - A - 79 023129 (FUJI GAS KOGYO K.K.) 21.02.1979<br>* Nr. 41149 * | 1-5,8-10 | |

Der vorliegende Recherchenbericht wurde für alle Patentansprüche erstellt.

| Recherchenort | Abschlußdatum der Recherche | Prüfer |
|---|---|---|
| DEN HAAG | 06-09-1984 | FLETCHER A.S. |

**KATEGORIE DER GENANNTEN DOKUMENTEN**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument